(19)

**Europäisches Patentamt**
**European Patent Office**
**Office européen des brevets**

(11)  **EP 3 964 537 B1**

(12)  # EUROPEAN PATENT SPECIFICATION

(45) Date of publication and mention
of the grant of the patent:
**13.11.2024 Bulletin 2024/46**

(21) Application number: **20832174.5**

(22) Date of filing: **18.06.2020**

(51) International Patent Classification (IPC):
**C08G 18/30** *(2006.01)*    **B32B 27/40** *(2006.01)*
**C08G 18/10** *(2006.01)*    **C08G 18/42** *(2006.01)*
**C09J 175/06** *(2006.01)*    **C08G 18/32** *(2006.01)*
**C08G 18/66** *(2006.01)*    **C08G 18/76** *(2006.01)*
**B32B 5/02** *(2006.01)*    **B32B 7/12** *(2006.01)*

(52) Cooperative Patent Classification (CPC):
(C-Sets available)
**C08G 18/4238; B32B 5/02; B32B 7/12;**
**C08G 18/307; C08G 18/3206; C08G 18/664;**
**C08G 18/7671; C08G 18/76**; **C09J 175/06;** B32B 2255/26;
B32B 2307/724; B32B 2307/7265; B32B 2437/00;
C08G 2170/20    (Cont.)

(86) International application number:
**PCT/JP2020/023886**

(87) International publication number:
**WO 2020/262182 (30.12.2020 Gazette 2020/53)**

(54) **MOISTURE-CURABLE POLYURETHANE RESIN COMPOSITION, ADHESIVE AND MULTILAYER BODY**

FEUCHTIGKEITSHÄRTENDE POLYURETHANHARZZUSAMMENSETZUNG, KLEBSTOFF UND
MEHRSCHICHTIGER KÖRPER

COMPOSITION DE RÉSINE EN POLYURÉTHANE DURCISSABLE À L'HUMIDITÉ, ADHÉSIF ET
CORPS MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2019   JP 2019117318**

(43) Date of publication of application:
**09.03.2022 Bulletin 2022/10**

(73) Proprietor: **DIC Corporation**
**Tokyo 174-8520 (JP)**

(72) Inventor: **KOMATSUZAKI, Kunihiko**
**Takaishi-shi, Osaka 592-0001 (JP)**

(74) Representative: **Kraus & Lederer PartGmbB**
**Thomas-Wimmer-Ring 15**
**80539 München (DE)**

(56) References cited:
EP-A1- 3 617 244    WO-A1-2017/111033
WO-A1-2018/173768    WO-A1-2021/054129
JP-A- 2009 155 645    JP-A- 2011 225 851
JP-A- 2011 225 863    JP-A- 2015 038 162
JP-A- 2018 062 642    JP-A- 2018 095 831
JP-A- H10 237 412    US-A1- 2011 257 273

• EVONIK AG: "Flying the flag for customized
solutions. Designed Polymers for Adhesives &
Sealants", EVONIK. KRAFT FÜR NEUES, 1
September 2011 (2011-09-01), pages 1 - 56,
XP055794875
• CRODA: "Priplast (TM) - 100% renewability for
green polyurethanes", 1 January 2013
(2013-01-01), XP055918603, Retrieved from the
Internet
<URL:https://www.ulprospector.com/document
s/1231622.pdf?bs=2998&b=361859&st=20&r=eu
&ind=coatings> [retrieved on 20220506]

(52) Cooperative Patent Classification (CPC): (Cont.)

C-Sets
**C08G 18/12, C08G 18/302**

**Description**

Technical Field

The present invention relates to the use of a moisture-curable polyurethane hot-melt resin composition as an adhesive for producing moisture-permeable waterproof functional clothing.

Background Art

Moisture-permeable waterproof functional clothing having both moisture permeability and waterproofness is a material having a structure that has a moisture permeable film bonded onto a cloth using an adhesive, and, as the adhesive, in view of excellent adhesion with both the moisture permeable film and the cloth, an urethane adhesive is generally used. Further, recently, there are solvent emission regulations and residual solvent regulations worldwide, and thus, among the urethane adhesives, a moisture-curable polyurethane resin composition which is of a solventless type is gradually increased in the amount of the composition used (see, for example, PTL 1).

Meanwhile, the cloth used in the clothing is reduced in denier and improved in water repellency to further improve the function, and consequently, a problem of poor adhesion of such a cloth with an adhesive is pointed out, and the moisture-curable polyurethane resin composition currently used has not yet exhibited high adhesion, particularly with a super-water-repellent cloth.

Further, marine plastic pollution problems have drawn attention recently, and accordingly, biobased resins aimed at getting rid of the fossil fuel resources have increasingly attracted attention, and the moisture-curable polyurethane resin composition is no exception.

US 2011/257273 A1 describes a low-molecular-weight polyester resin which can elasticize a resin suitably and can be used for various purposes and various resins obtained by using the resin. The polyester resin is obtained by polymerizing a monomer composition containing 10 to 90 weight % of a linear dicarboxylic acid and/or diol having at least 8 carbon atoms (I), 5 to 80 weight % of a branched dicarboxylic acid and/or diol having at least 4 carbon atoms (II-1) and/or 2 to 40 weight % of at least one polyfunctional monomer (II-2) selected from the group consisting of polyols, polycarboxylic acids and hydroxycarboxylic acids having 3 or more functional groups respectively and which has the number average molecular weight of 500 to 5000 and is amorphous.

EP 3 617 244 A1 describes a moisture curable hotmelt adhesive composition comprising at least one polyurethane prepolymer obtained from the reaction of a) at least one polyether; b) at least one (meth)acrylic resin; c) at least one crystalline polyester; d) at least one amorphous polyester; e) at least one isocyanate compound; in a presence of a catalyst, wherein at least one of said polyether, crystalline polyester and amorphous polyester is partially or completely bio-based material.

WO 2021/054129 A1 relates to the problem to provide, using biomass-derived raw materials, a moisture-curable polyurethane resin composition which is excellent in terms of adhesion to fabric (in particular, water-repellent fabric) and film strength. As a solution to the problem, the document describes a moisture-curable polyurethane hot-melt resin composition characterized by including a urethane prepolymer (i) having isocyanate groups which is a product of reaction between polyols (A) and a polyisocyanate (B), the polyols (A) comprising a polyester polyol (a1) obtained from a biomass-derived polybasic acid (x) and a biomass-derived glycol (y) as raw materials and other polyester polyol(s) (a2). The document further describes an adhesive characterized by comprising the moisture-curable polyurethane hot-melt resin composition.

Further technical background is described in EVONIK AG, "Flying the flag for customized solutions. Designed Polymers for Adhesives & Sealants", EVONIK. KRAFT FOR NEUES, pages 1 - 56, and Croda, "Priplast (TM) - 100% renewability for green polyurethanes", URL:https://www.ulprospector.com/documents/1231622.pdf?bs=2998&b=361859&st=20&r=eu&ind=coatings.

Citation List

Patent Literature

PTL 1: JP-A-2017-202608

Summary of Invention

Technical Problem

A task to be achieved by the present invention is to provide the use of a moisture-curable polyurethane hot-melt resin composition which uses a biomass raw material, and which has excellent adhesion with a cloth (particularly, a water-repellent cloth) as an adhesive for producing moisture-permeable waterproof functional clothing.

Solution to Problem

As a solution to the above problem, the invention provides the use according to claim 1. Preferred embodiments of the invention are defined in the dependent claims.

Advantageous Effects of Invention

The moisture-curable polyurethane resin composition used according to the invention uses a biomass raw material, and thus is an environment-friendly material. Further, the moisture-curable polyurethane resin composition used according to the invention has excellent adhesion with various types of cloths, and has excellent adhesion even with a water-repellent cloth.

Description of Embodiments

The moisture-curable polyurethane hot-melt resin composition used in the present invention contains an urethane prepolymer (i) having an isocyanate group, which is a reaction product of a polyol (A) comprising a specific polyester polyol, and a polyisocyanate (B).
It is necessary that the polyol (A) comprise a polyester polyol (a1) which uses a polybasic acid (x) derived from biomass and a glycol (y) derived from biomass as raw materials.
As the biomass-derived polybasic acid (x), sebacic acid and/or succinic acid is used. These compounds may be used individually or in combination.
As the above-mentioned sebacic acid, for example, there can be used sebacic acid which is obtained by subjecting a vegetable fat or oil, such as castor oil, to known cleavage reaction using caustic alkali. As the above-mentioned succinic acid, for example, there can be used succinic acid which is obtained by subjecting corn, sugarcane, casaba, sago palm, or the like to fermentation by a known method.
With respect to the biomass-derived polybasic acid (x), among those mentioned above, from the viewpoint of obtaining even more excellent adhesion with a cloth, sebacic acid is more preferred.
As the biomass-derived glycol (y), 1,3-propanediol and/or 1,4-butanediol is used. These compounds may be used individually or in combination.
As the above-mentioned 1,3-propanediol, for example, there can be used 1,3-propanediol which is obtained by forming 3-hydroxypropionaldehyde from glycerol, glucose, or another saccharide by a known fermentation method and then converting it to 1,3-propanediol; or which is directly obtained from glucose or another saccharide by a fermentation method.
As the above-mentioned 1,4-butanediol, for example, there can be used 1,4-butanediol which is obtained from glucose by a known fermentation method; which is obtained from 1,3-butadiene obtained by a fermentation method; or which is obtained by hydrogenating succinic acid using a reducing catalyst.
With respect to the biomass-derived glycol (y), among those mentioned above, from the viewpoint of obtaining even more excellent adhesion with a cloth, 1,3-propanediol is more preferred.
The polyester polyol (a1) uses the biomass-derived polybasic acid (x) and the biomass-derived glycol (y) as essential raw materials, but another polybasic acid and/or another glycol may be used in such an amount that the effects of the present invention are not sacrificed.
From the viewpoint of obtaining even more excellent mechanical strength and even more excellent adhesion with a cloth, the polyester polyol (a1) preferably has a number average molecular weight in the range of from 500 to 100,000, more preferably in the range of from 700 to 50,000, further preferably in the range of from 800 to 10,000. The number average molecular weight of the polyester polyol (a1) indicates a value measured by a gel permeation chromatography (GPC) method.
The polyol (A) contains the polyester polyol (a1) as an essential component, but may contain an additional polyol if necessary. The content of the polyester polyol (a1) in the polyol (A) is preferably 20% by mass or more, more preferably 50% by mass or more, further preferably 70% by mass or more.
As the above-mentioned additional polyol, for example, there can be used polyester polyol other than the polyester polyol (a1), polycarbonate polyol, polyether polyol, polybutadiene polyol, or polyacryl polyol. These polyols may be used individually or in combination.
The number average molecular weight of the additional polyol is, for example, in the range of from 500 to 100,000. The number average molecular weight of the additional polyol indicates a value measured by a gel permeation chromatography (GPC) method.

As the polyisocyanate (B), there can be used an aromatic polyisocyanate, such as polymethylene polyphenyl polyisocyanate, diphenylmethane diisocyanate, carbodiimide-modified diphenylmethane diisocyanate isocyanate, xylylene diisocyanate, phenylene diisocyanate, tolylene diisocyanate, or naphthalene diisocyanate; an aliphatic or alicyclic polyisocyanate, such as hexamethylene diisocyanate, cyclohexane diisocyanate, isophorone diisocyanate, dicyclohexylmethane diisocyanate, or tetramethylxylylene diisocyanate, or the like. These polyisocyanates may be used individually or in combination. Of these, from the viewpoint of obtaining even more excellent reactivity and even more excellent adhesion with a cloth, an aromatic polyisocyanate is preferably used, and diphenylmethane diisocyanate is more preferably used.

The amount of the polyisocyanate (B) used is preferably in the range of from 5 to 40% by mass, more preferably in the range of from 10 to 30% by mass, based on the total mass of the raw materials constituting the urethane prepolymer (i).

The hot-melt urethane prepolymer (i) is obtained by reacting the polyol (A) and the polyisocyanate (B), and has an isocyanate group which is capable of reacting with water present in air or the substrate to which the moisture-curable polyurethane hot-melt resin composition is applied to form a crosslinked structure.

With respect to the method for producing the hot-melt urethane prepolymer (i), for example, the hot-melt urethane prepolymer (i) can be produced by a method in which the polyisocyanate (B) is placed in a reaction vessel containing the polyol (A) and reacted under conditions such that the amount of the isocyanate group of the polyisocyanate (B) is excessively larger than the amount of the hydroxyl group of the polyol (A).

In producing the hot-melt urethane prepolymer (i), from the viewpoint of obtaining even more excellent adhesion, the equivalent ratio of the isocyanate group of the polyisocyanate (B) to the hydroxyl group of the polyol (A) (isocyanate group/hydroxyl group) is preferably in the range of from 1.1 to 5, more preferably in the range of from 1.5 to 3.

With respect to the hot-melt urethane prepolymer (i) obtained by the above-mentioned method, from the viewpoint of obtaining even more excellent adhesion, the hot-melt urethane prepolymer (i) preferably has an isocyanate group content (hereinafter, referred to simply as "NCO%") in the range of from 1.7 to 5, more preferably in the range of from 1.8 to 3. The NCO% of the hot-melt urethane prepolymer (i) indicates a value measured by a potentiometric titration method in accordance with JIS K1603-1:2007.

The moisture-curable polyurethane hot-melt resin composition used in the invention contains the urethane prepolymer (i) as an essential component, but may use an additional additive if necessary.

With respect to the additional additive, for example, there can be used a light stabilizer, a curing catalyst, a tackifier, a plasticizer, a stabilizer, a filler, a dye, a pigment, a fluorescent brightener, a silane coupling agent, a wax, a thermoplastic resin, and the like. These additives may be used individually or in combination.

The moisture-curable polyurethane resin composition used according to the invention preferably has a biomass degree of 40% or more, more preferably 70% or more. The biomass degree of the moisture-curable polyurethane hot-melt resin composition indicates a ratio of the total weight of the biomass-derived raw materials used when producing the moisture-curable polyurethane hot-melt resin composition to the whole weight of the moisture-curable polyurethane hot-melt resin composition.

As mentioned above, the moisture-curable polyurethane hot-melt resin composition used according to the invention uses a biomass raw material, and thus is an environment-friendly material. Further, the moisture-curable polyurethane resin composition used according to the invention has excellent adhesion with various types of cloths, and has excellent adhesion even with a water-repellent cloth. Therefore, the moisture-curable polyurethane hot-melt resin composition is especially advantageously used as an adhesive for producing moisture-permeable waterproof functional clothing.

Next, a multilayer body that can be obtained by the use of the present invention is described.

The multilayer body has at least a cloth (i) and a cured product of the moisture-curable polyurethane hot-melt resin composition.

As the cloth (i), for example, there can be used a fiber substrate, such as nonwoven fabric, woven fabric, or knitted fabric, each formed from a polyester fiber, a polyethylene fiber, a nylon fiber, an acrylic fiber, a polyurethane fiber, an acetate fiber, a rayon fiber, a polylactate fiber, cotton, linen, silk, wool, a glass fiber, a carbon fiber, a mixed fiber thereof, or the like; the above-mentioned nonwoven fabric which is impregnated with a resin, such as a polyurethane resin; the above-mentioned nonwoven fabric which has further formed thereon a porous layer; a resin substrate, or the like.

Further, with respect to the cloth (i), the composition used according to the invention exhibits excellent adhesion even with the above-mentioned cloth which has been subjected to water repellency treatment (hereinafter, referred to simply as "water-repellent cloth"). In the invention, with respect to the water-repellent cloth, the "water repellency" indicates a cloth having a surface free energy of 50 mJ/m$^2$ or less, as obtained from the calculation shown below.

A contact angle of a measurement liquid (water and diiodomethane) on the cloth (i) was measured using a contact angle meter ("DM500", manufactured by Kyowa Interface Science Co., Ltd.). Based on the result of the measurement, a surface free energy of the cloth (i) was calculated using the following formula (1).

$$(1 + \cos A) \cdot \gamma L/2 = (\gamma sd \cdot \gamma Ld)1/2 + (\gamma sp \cdot \gamma Lp)1/2$$

A: Contact angle of the measurement liquid on the cloth (i)
yL: Surface tension of the measurement liquid
yLd: Dispersion force component of the surface free energy of the measurement liquid
yLp: Polarity force component of the surface free energy of the measurement liquid
ysd: Dispersion force component of the surface free energy of the cloth (i)
ysp: Polarity force component of the surface free energy of the cloth (i)

As a method for applying the moisture-curable polyurethane hot-melt resin composition, for example, there can be mentioned a method using a roll coater, a knife coater, a spray coater, a gravure roll coater, a comma coater, a T-die coater, an applicator, a dispenser, or the like.

The moisture-curable polyurethane hot-melt resin composition is applied, and then can be dried and matured by a known method.

The cured product of the moisture-curable urethane hot-melt resin composition has a thickness, for example, in the range of from 5 to 300 μm.

The moisture-curable polyurethane hot-melt resin composition is used as an adhesive for moisture-permeable waterproof functional clothing, and it is preferred that the moisture-curable polyurethane hot-melt resin composition is intermittently applied by means of a gravure roll coater or a dispenser and the cloth (i) and a known moisture permeable film are put on one another. In this case, the cured product of the moisture-curable polyurethane hot-melt resin composition has a thickness, for example, in the range of from 5 to 50 μm.

Examples

Hereinbelow, the present invention will be described in more detail with reference to the following Examples.

[Example 1]

Into a four-necked flask equipped with a thermometer, a stirrer, an inert gas introducing inlet, and a reflux condenser was charged 80 parts by mass of a biomass polyester polyol (reaction product of sebacic acid ("Sebacic Acid", manufactured by Hokoku Corporation) and 1,3-propanediol ("SUSTERRA Propanediol", manufactured by Dupont, Inc.); number average molecular weight: 2,000; hereinafter, referred to simply as "BioPEs (1)"), and the BioPEs (1) was dehydrated by vacuum drying at 110°C until the water content became 0.05% by mass or less. Subsequently, after cooling to 60°C, 20 parts by mass of diphenylmethane diisocyanate (hereinafter, abbreviated to "MDI") was added, and the resultant mixture was increased in temperature to 110°C and subjected to reaction for 2 hours until the isocyanate group content became constant, obtaining a moisture-curable polyurethane hot-melt resin composition.

[Example 2]

A moisture-curable polyurethane hot-melt resin composition was obtained in substantially the same manner as in Example 1 except that, instead of the BioPEs (1), a biomass polyester polyol (reaction product of sebacic acid ("Sebacic Acid", manufactured by Hokoku Corporation) and 1,4-butanediol ("Bio-BDO", manufactured by Jenomatica, Inc.); number average molecular weight: 2,000; hereinafter, referred to simply as "BioPEs (2)") was used.

[Example 3]

A moisture-curable polyurethane hot-melt resin composition was obtained in substantially the same manner as in Example 1 except that, instead of the BioPEs (1), a biomass polyester polyol (reaction product of succinic acid ("Succinic Acid", manufactured by SUCCINITY GmbH) and 1,3-propanediol ("SUSTERRA Propanediol", manufactured by Dupont, Inc.); number average molecular weight: 2,000; hereinafter, referred to simply as "BioPEs (3)") was used.

[Comparative Example 1]

Into a four-necked flask equipped with a thermometer, a stirrer, an inert gas introducing inlet, and a reflux condenser were charged 15 parts by mass of a polyester polyol (reaction product of phthalic anhydride and 1,6-hexanediol (which are of a petroleum type); number average molecular weight: 2,000; hereinafter, referred to simply as "RPEs (1)") and a polyester polyol (reaction product of phthalic anhydride, terephthalic acid, adipic acid, and ethylene glycol (which are of a petroleum type); number average molecular weight: 3,700; hereinafter, referred to simply as "RPEs (2)"), and the resultant mixture was dehydrated by vacuum drying at 110°C until the water content became 0.05% by mass or less. Subsequently, after cooling to 60°C, 20 parts by mass of MDI was added, and the resultant mixture was increased in temperature to 110°C and subjected to reaction for 2 hours until the isocyanate group content became constant, obtaining a moisture-curable polyurethane hot-melt resin composition.

[Method for measuring a number average molecular weight]

The number average molecular weight of the polyol used in the Examples and Comparative Example is a value as measured by a gel permeation chromatography (GPC) method under the conditions shown below.
Measuring apparatus: High-speed GPC apparatus ("HLC-8220 GPC", manufactured by Tosoh Corp.)
Columns: The columns shown below, manufactured by Tosoh Corp., which are connected in series were used.

"TSKgel G5000" (7.8 mm I. D. $\times$ 30 cm) $\times$ 1
"TSKgel G4000" (7.8 mm I. D. $\times$ 30 cm) $\times$ 1
"TSKgel G3000" (7.8 mm I. D. $\times$ 30 cm) $\times$ 1
"TSKgel G2000" (7.8 mm I. D. $\times$ 30 cm) $\times$ 1

Detector: RI (differential refractometer)
Column temperature: 40°C
Eluent: Tetrahydrofuran (THF)
Flow rate: 1.0 mL/minute
Sample amount per injection: 100 $\mu$L (tetrahydrofuran solution having a sample concentration of 0.4% by mass)
Standard sample: A calibration curve was prepared using the standard polystyrenes shown below.

(Standard polystyrenes)

"TSKgel standard polystyrene A-500", manufactured by Tosoh Corp.
"TSKgel standard polystyrene A-1000", manufactured by Tosoh Corp.
"TSKgel standard polystyrene A-2500", manufactured by Tosoh Corp.
"TSKgel standard polystyrene A-5000", manufactured by Tosoh Corp.
"TSKgel standard polystyrene F-1", manufactured by Tosoh Corp.
"TSKgel standard polystyrene F-2", manufactured by Tosoh Corp.
"TSKgel standard polystyrene F-4", manufactured by Tosoh Corp.
"TSKgel standard polystyrene F-10", manufactured by Tosoh Corp.
"TSKgel standard polystyrene F-20", manufactured by Tosoh Corp.
"TSKgel standard polystyrene F-40", manufactured by Tosoh Corp.
"TSKgel standard polystyrene F-80", manufactured by Tosoh Corp.
"TSKgel standard polystyrene F-128", manufactured by Tosoh Corp.
"TSKgel standard polystyrene F-288", manufactured by Tosoh Corp.
"TSKgel standard polystyrene F-550", manufactured by Tosoh Corp.

[Evaluation method for adhesion with a cloth]

The moisture-curable polyurethane hot-melt resin compositions obtained in the Examples and Comparative Example were individually melted at 100°C, and then applied onto a moisture permeable film ("VENTEX", manufactured by Kahei Co., Ltd.) using a gravure roll coater (40 L/inch; 130 depth; coating weight: 10 g/m$^2$), and put on each of the three types of cloths shown below, and allowed to stand in an atmosphere at a temperature of 23°C and at a humidity of 50% for 2 days to obtain a processed cloth.

Cloth (1): Non-water-repellent cloth (having a surface free energy of more than 50 mJ/m$^2$)
Cloth (2): Water-repellent cloth (having a surface free energy in the range of from 10 to 50 mJ/m$^2$)
Cloth (3): Super-water-repellent cloth (having a surface free energy of less than 10 mJ/m$^2$)

The obtained processed cloth was cut into a piece with a width of 1 inch, and, using "Autograph AG-1", manufactured by Shimadzu Corporation, a peel strength (N/inch) of the moisture permeable film and the cloth was measured.

[Table 1]

| Table | | Example 1 | Example 2 | Example 3 | Comparative Example 1 |
|---|---|---|---|---|---|
| Polyester polyol (a) | | BioPEs (1) | BioPEs (2) | BioPEs (3) | |
| | Polybasic acid (x) | Sebacic acid | Sebacic acid | Succinic acid | |
| | Glycol (y) | 13PD | 14BD | 13PD | |
| Additional polyol | | | | | RPEs (1) |
| | | | | | RPEs (2) |
| Polyisocyanate (B) | | MDI | MDI | MDI | MDI |
| Biomass degree (%) | | 80 | 80 | 80 | 0 |
| Evaluation of adhesion with cloth (N/inch) | Cloth (1) | 8 | 8 | 8 | 8 |
| | Cloth (2) | 8 | 7 | 7 | 5 |
| | Cloth (3) | 8 | 5 | 6 | 1 |

The abbreviations shown in Table 1 are as follows.

- "13PD": 1,3-Propanediol ("SUSTERRA Propanediol", manufactured by Dupont, Inc.)
- "14BD": 1,4-Butanediol ("Bio-BDO", manufactured by Jenomatica, Inc.)

It was found that the moisture-curable polyurethane hot-melt resin composition used according to the present invention has a high biomass degree and excellent adhesion with a cloth. Particularly, it was found that the moisture-curable polyurethane hot-melt resin composition used according to the present invention has excellent adhesion even with a water-repellent cloth and a super-water-repellent cloth.

On the other hand, in Comparative Example 1 which corresponds to an embodiment in which a biomass raw material is not used, the adhesion with a water-repellent cloth or a super-water-repellent cloth was poor.

## Claims

1. Use of a moisture-curable polyurethane hot-melt resin composition containing an urethane prepolymer (i) having an isocyanate group, which is a reaction product of a polyol (A) and a polyisocyanate (B), the polyol (A) comprising a polyester polyol (a1) which uses a polybasic acid (x) derived from biomass and a glycol (y) derived from biomass as raw materials

   as an adhesive for producing moisture-permeable waterproof functional clothing,
   wherein the biomass-derived polybasic acid (x) is sebacic acid and/or succinic acid, and
   wherein the biomass-derived glycol (y) is 1,3-propanediol and/or 1,4-butanediol.

2. The use according to claim 1, wherein the moisture-curable polyurethane resin composition has a biomass degree of 40% or more.

3. The use according to claim 1 or 2, wherein a multilayer body having at least a cloth (i) and a cured product of the moisture-curable polyurethane resin composition is produced.

4. The use according to claim 3, wherein the cloth (i) is a water-repellent cloth.

**Patentansprüche**

1. Verwendung einer feuchtigkeitshärtbaren Polyurethan-Heißschmelzharzzusammensetzung enthaltend ein UrethanPrepolymer (i) mit einer Isocyanatgruppe, das ein Reaktionsprodukt eines Polyols (A) und eines Polyisocyanats (B) ist, wobei das Polyol (A) ein Polyesterpolyol (a1) umfasst, das eine von Biomasse abgeleitete mehrbasige Säure (x) und ein von Biomasse abgeleitetes Glykol (y) als Rohmaterialien verwendet,

   als Klebstoff zur Herstellung feuchtigkeitsdurchlässiger, wasserdichter Funktionskleidung,
   wobei die von Biomasse abgeleitete mehrbasige Säure (x) Sebacinsäure und/oder Bernsteinsäure ist, und
   wobei das von Biomasse abgeleitete Glykol (y) 1,3-Propandiol und/oder 1,4-Butandiol ist.

2. Verwendung nach Anspruch 1, wobei die feuchtigkeitshärtbare Polyurethanharzzusammensetzung einen Biomassegrad von 40 % oder mehr aufweist.

3. Verwendung nach Anspruch 1 oder 2, wobei ein mehrschichtiger Körper mit mindestens einem Gewebe (i) und einem gehärteten Produkt der feuchtigkeitshärtbaren Polyurethanharzzusammensetzung hergestellt wird.

4. Verwendung nach Anspruch 3, wobei das Gewebe (i) ein wasserabweisendes Gewebe ist.

**Revendications**

1. Utilisation d'une composition de résine thermofusible polyuréthane durcissant à l'humidité contenant un prépolymère uréthane (i) ayant un groupe isocyanate, qui est un produit de réaction d'un polyol (A) et d'un polyisocyanate (B), le polyol (A) comprenant un polyester polyol (a1) qui utilise un acide polybasique (x) dérivé de la biomasse et un glycol (y) dérivé de la biomasse comme matières premières,

   comme adhésif pour la fabrication de vêtements fonctionnels imperméables à l'eau et perméables à l'humidité,
   dans laquelle l'acide polybasique dérivé de la biomasse (x) est l'acide sébacique et/ou l'acide succinique, et
   dans laquelle le glycol dérivé de la biomasse (y) est le 1,3-propanediol et/ou le 1,4-butanediol.

2. Utilisation selon la revendication 1, dans laquelle la composition de résine polyuréthane durcissant à l'humidité a un degré de biomasse de 40 % ou plus.

3. Utilisation selon la revendication 1 ou 2, dans laquelle on produit un corps multicouche comportant au moins un tissu (i) et un produit durci de la composition de résine polyuréthane durcissant à l'humidité.

4. Utilisation selon la revendication 3, dans laquelle le tissu (i) est un tissu hydrofuge.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011257273 A1
- EP 3617244 A1
- WO 2021054129 A1
- JP 2017202608 A

**Non-patent literature cited in the description**

- **EVONIK AG.** Flying the flag for customized solutions. Designed Polymers for Adhesives & Sealants. *EVONIK. KRAFT FOR NEUES,* 1-56
- **CRODA.** *Priplast (TM) - 100% renewability for green polyurethanes, https://www.ulprospector.com/documents/1231622.pdf?bs=2998&b=3 61859&st=20&r=eu&ind=coatings.*